# EUROPEAN PATENT SPECIFICATION

(11) **EP 0 699 900 B1**
(45) Date of publication and mention of the grant of the patent: **09.01.2002**
(21) Application number: 95109514.0
(22) Date of filing: 20.06.1995
(51) Int. Cl.: G01M 1/16, F01D 5/02

(54) **Balancing process and balancing machine for turbosupercharger units in supercharged engines**
Auswuchtverfahren und Auswuchtmaschine für einen Turbolader von aufgeladenen Motoren
Procédé et machine d'équilibrage pour un turbocompresseur de moteurs suralimentés

(30) Priority: 04.08.1994 IT MI941697
(43) Date of publication of application: 06.03.1996
(73) Proprietor: BALANCE SYSTEMS S.p.A., 20145 Milano (IT); T.M.I. Turbo Manufacturing Italy S.r.l., 20139 Milano (IT)
(72) Inventor: Albini, Eugenio, c/o Turbital S.r.L., I-20139 Milano (IT); Trionfetti, Gianni, I-20041 Agrate Brianza (Milano) (IT)
(74) Representative: Lunati, Vittoriano

(56) References cited:
- GB-A- 2 173 602
- US-A- 4 864 859
- PATENT ABSTRACTS OF JAPAN vol. 13, no. 498 (M-890), 9 November 1989 & JP-A-01 200002 (HONDA MOTOR CO LTD), 11 August 1989,

## Description

The invention relates to a balancing process and a balancing machine for turbosupercharger units of supercharged engines, such as turbosupercharger units mounted on land, marine and industrial engines.

It is known that during the initial assembling step and subsequently during the checking and maintenance interventions on turbosupercharger units of different sizes, balancing is one of the most important operations.

Actually, rotors in these turbosupercharger units rotate at very high work speeds and consequently very narrow balancing tolerances are required.

In the known art balancing includes detection of the possibly existing unbalances by apparatus named balancing machines for the so-called "CORE ASSY", adapted to operate on the rotor of the turbosupercharger unit.

It is known that rotor is that part of the turbosupercharger unit which comprises the turbine utilizing the exhaust gases, the compressor and the keying shaft for these components.

In these balancing machines said rotor is set in rotation at a speed of about two thousand revolutions per minute for example, by a belt.

The detected unbalances are subsequently compensated for, by removing small amounts of material by manual grinding or milling, which operation can be carried out both at the turbine and the rotor compressor.

The balanced rotor is then fitted into its casing, within which the bearing brasses, oil seal rings and lubricating ducts are arranged.

The above described known art has important disadvantages.

First of all, the mounting-completing steps carried out after the balancing operation may modify the previously achieved balanced state and in some cases even cancel it.

In fact, in order to be able to fit the rotor into the previously mentioned casing, dismantling of the compressor or the turbine from the keying shaft must be first executed, subsequent reassembling of said temporarily dismantled component being then required.

Clearly these operations may involve balancing variations which are unacceptable due to the very high accuracy requested from turbosupercharger units.

Furthermore, belt-driving of the rotor during the balancing operation, in addition to producing those inconveniences that are typical of belts, gives rise to mechanical stresses in addition to or at all events different from those usually provided when it is the turbine of the rotor itself to cause rotation of same: the operating conditions during the balancing step are therefore altered as compared with the real ones.

To obviate these drawbacks US-A-4 864 859 discloses a method and machine wherein a substantially complete and assembled turbosupercharger unit is subjected to the balancing operation.

The unit is mounted in an unbalance-detecting device through bellows conduits so arranged that the movement of the turbosupercharger unit is substantially unrestrained in all three spatial directions. Rotation of the rotor is provided by an air flow directed onto the turbine blades to accelerate the rotor to substantially normal operating speeds. Unbalances are detected by measuring the maximum acceleration of the housing of the turbosupercharger unit and the phase angle from a predetermined reference angle when the maximum acceleration occurs.

These known method and machine thus avoid dismantling and reassembling of the turbosupercharger unit and the balancing result can no longer be modified when the unit is reinstalled in the engine. However, these method and machine do not take account of thermal deformations that may be responsible of unbalances when the turbosupercharger is operating in the engine.

Under this situation the technical task underlying the present invention is to devise a balancing process and a balancing machine capable of substantially eliminating the above disadvantages.

The technical task mentioned is substantially achieved by a balancing process and a balancing machine for turbosupercharger units in supercharged engines having the features set out in the appended claims 1 and 3. Preferred and advantageous features will be apparent from the remaining claims.

The details and advantages of the invention will best be understood from the following description of a preferred embodiment of the invention given by way of non-limiting example with reference to the accompanying drawings, in which:

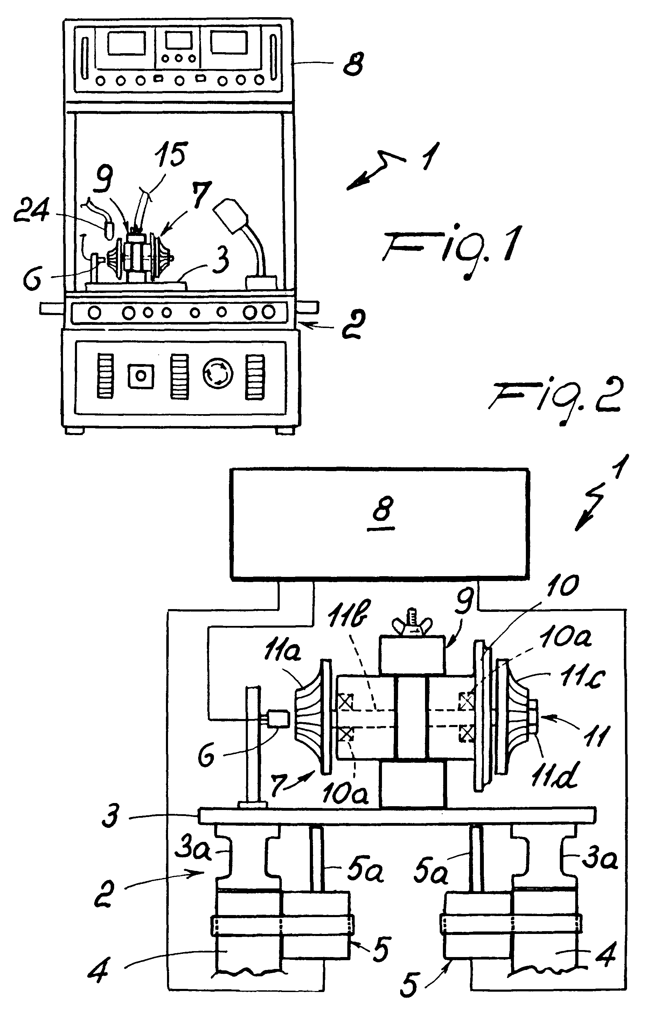

**Figure 1** shows the machine of the invention taken as a whole;
**Figure 2** diagrammatically shows some components of the machine of Fig. 1;

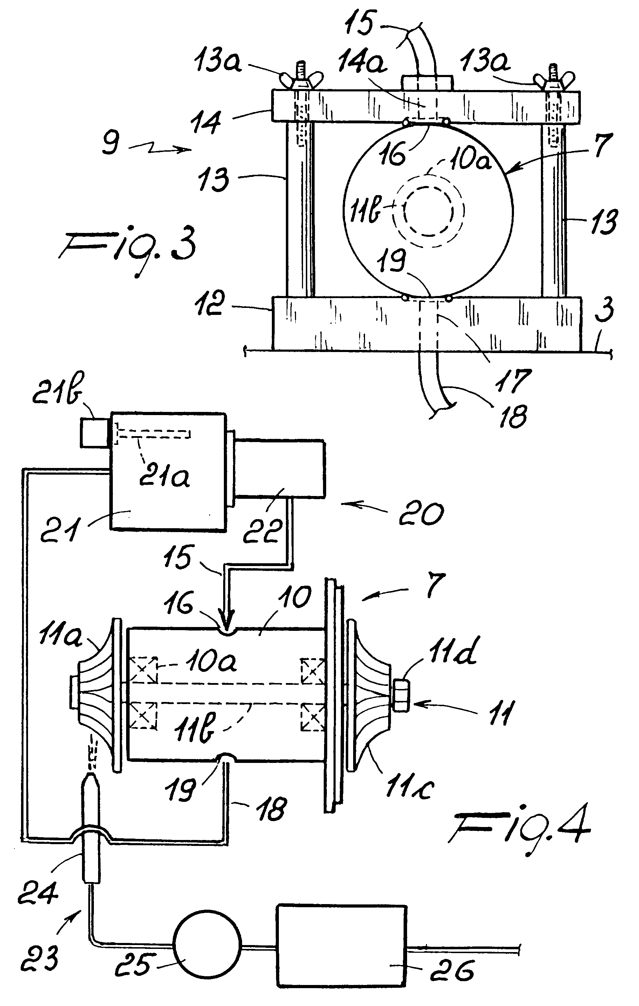

**Figure 3** illustrates a supporting and locking equipment included in the machine of Fig. 1, as well as the oil feeding system provided for the turbosupercharger; and
**Figure 4** is a diagram showing the devices for the oil feeding system and compressed air delivery in the machine of the invention.

Referring to the drawings, the balancing process is as follows.

During a possible initial step, previous balancing of the rotor of a turbosupercharger unit may be provided, in the same manner as it occurs in the known art. In this case the rotor unbalances are detected, which rotor is formed of the turbine utilizing the exhaust gases, the compressor and the shaft extending between the turbine and compressor and is separated from all those components with which it is then to be assembled, in particular devoid of the casing in which it is partly fitted.

Then the detected unbalances are compensated for, so as to possibly obtain an already balanced rotor.

When the above mentioned optional initial step has been completed, the process according to the invention comprises preparatory steps and operating steps, the latter being no longer carried out on the rotor alone, but on the whole turbosupercharger unit arranged to the conditions corresponding to those of normal use, that is the conditions actually present when the turbosupercharger unit is associated with an engine.

The preparatory steps consist in submitting the turbosupercharger unit to a substantially complete mounting or assembling which in particular comprises fitting of the rotor keying shaft into the casing in which, as known, the bearing brasses, oil seal rings and other components are held.

Subsequently, in order to reach said actual operating conditions of the turbosupercharger unit, the assembled turbosupercharger unit is supplied with lubricating oil at temperatures and pressures substantially corresponding to those of the operating conditions of the engine to which it is to be coupled.

Finally the preparatory steps are completed by supplying the turbine of the turbosupercharger unit with compressed air.

Delivery of the compressed air takes place at a pressure adapted to impose rotation of the rotor at least at a first predetermined speed, substantially equal to ten thousand revolutions per minute for example, corresponding to a foreseen value intended to detect unbalances in said turbosupercharger unit.

When this operating step has been completed, the possible unbalances detected and the balancing interventions (known per se), if necessary, executed, a second advantageous operating step may be provided.

During this second step, the rotor turbine is fed with compressed air at a very high pressure, practically the maximum available pressure, so as to impose a second rotation speed to the rotor which is greatly higher than the first one, of thirty thousand revolutions per minute for example, or even higher

While keeping the turbosupercharger unit to the above maximum speed, a true general test of the unit itself is carried out, the oil tightness and unit functionality as a whole being in particular checked.

The balancing machine performing the process of the invention is identified by reference numeral **1**.

It comprises at least one unbalance-detecting device **2**, known per se, formed of a swinging plate **3** supported by deformable elements 3a mounted on vibration-damping columns **4**. Vibration transducers **5** provided with feeler pins **5a** facing the swinging plate 3 are in engagement with said columns.

A photoelectric cell **6** enables measurement of the rotation speed of a turbosupercharger unit **7** to be submitted to balancing and operating checkings.

The photoelectric cell 6 and vibration transducers 5 terminate at an electronic control processor **8**.

The machine 1 comprises a supporting equiment **9** adapted to engage the turbosupercharger unit 7 at a box-shaped body or casing **10** that in turn rotatably supports the rotor **11** upon interposition of bearing brasses **10a**.

The rotor, as is known, comprises a turbine **11a,** a keying shaft **11b** and a compressor **11c.** Generally the two first components form one single piece, whereas the third component is fastened to the shaft 11b by a nut **11d.** The keying shaft 11b passes through the casing 10.

Practically, the turbosupercharger unit 7 is fixedly locked into the supporting equipment 9 in a completely assembled condition with respect to the normal operating use conditions.

The supporting equipment 9 comprises one locking bracket **12**, located at a lowermost position, a pair of posts **13** integral with the bracket 12, and a second locking bracket **14** located at an upper position and adapted to be secured to the posts 13 by screw means **13a**.

The upper bracket 14 is connected with an oil delivery pipe **15** in the extension of which there is a supply hole **14a** provided with a seal, to be placed in register with an inlet port **16** formed in the casing 10. In the same manner, the lower bracket 12 has an exhaust hole **17** in the extension of an exhaust pipe **18**, to be placed in register with an outlet port **19** formed in the casing 10.

The delivery pipe 15 and exhaust pipe 18 terminate at a feeding device **20** for the lubricating oil comprising a tank 21 and a pump 22.

The tank 21 is provided with a resistance heater 21a and thermostats **21b** adapted to keep the oil temperature to values substantially corresponding to those occurring when the turbosupercharger unit is associated with an engine, 90°C for example, or in the range of 70 to 90°C. Likewise, the pump 22 is capable of keeping the lubricating oil pressure to values substantially corresponding to the specific values for said engine, for example of the order of 4 bars.

Finally, a compressed air delivery device **23** is provided which is adapted to set the rotor 11 in rotation.

The compressed air delivery device comprises a nozzle **24** located close to the turbine 11a, a pressure regulator **25** and a solenoid valve **26** to shut off or enable passage of the air stream coming from a compressed air distribution network for example.

Operation of the machine is as follows.

When the whole turbosupercharger unit 7 is assembled, it is placed in the supporting equipment 9 and fixedly locked therein.

Care should be taken so that the oil exhaust hole 17 and supply hole 14a of the first bracket 12 and second bracket 14 respectively be placed exactly in register with the oil inlet port 16 and the oil outlet port 19 of the turbosupercharger unit 7.

Then the lubricating oil feeding device 20 is set in operation, the temperature and pressure of said oil being adjusted to the normal operating conditions of the turbosupercharger unit 7, that is when the latter is associated with an engine.

Subsequently, by delivering compressed air from the nozzle 24 the turbine 11a is set in rotation and then the rotor 11 as well.

The air pressure is such adjusted that the rotation speed detected by the photoelectric cell 6 corresponds to said first speed for the unbalance-detecting operating step.

This first speed can be selected to a high value, for the reasons to be explained in the following, and substantially it is as high as ten thousand revolutions per minute. The air pressure for achieving this speed can be of the order of four bars.

After completion of the balancing operation, the air pressure regulator 25 is put to its maximum opening position so as to supply the nozzle 24 with air at the highest available pressure.

Consequently the rotor of the turbosupercharger unit rotates at the highest possible number of revolutions under the actual test conditions. For example, a rotation speed of about thirty thousand revolutions per minute or higher can be reached with a pressure of substantially eight bars.

Under this second maximum-speed condition the oil-tightness of the turbosupercharger unit is checked as well as the functionality of same, therefore a true general test is carried out on the turbosupercharger itself.

The invention achieves important advantages.

The turbosupercharger unit is balanced at its real operating conditions because there is a lubricating circuit used to the same pressure and temperature values that can be found during the normal operation of the unit, so that also unbalances that may be generated due to heat deformations are detected, and because the rotor is moved by an air stream addressed to the turbine in the same manner as when the exhaust gases carry out the turbine movement.

High rotation speeds, often higher than those possible before, can be reached, because inconveniences due to a driving action different from the one existing in normal work conditions are not present and because a real lubrication exists.

Note should be also taken of the fact that, since the centrifugal effect of unbalances is proportional to the rotation speed to the square, much more exact checkings can be obtained and also more in conformity with what actually happens during the normal operation. Just as an indication, unbalances corresponding to one thousandth of a gram can be detected.

In addition, the turbosupercharger unit is balanced after the rotor has been fitted into the respective casing and therefore the achieved balancing state cannot undergo modifications and changes any longer.

Under this situation, an immediate true general test of the turbosupercharger unit by making it rotate, at the end, at its maximum speed is also possible and is very advantageous too.

## Claims

1. A balancing process for turbosupercharger units of supercharged engines, comprising:
- associating a substantially complete and assembled turbosupercharger unit with an unbalance-detecting device,
- supplying the turbosupercharger unit, while in engagement with said unbalance-detecting device, with lubricating oil,
- setting the rotor of the turbosupercharger unit in rotation by a compressed air flow, while the turbosupercharger unit is supplied with lubricating oil, and
- detecting unbalance in the turbosupercharger unit while it is rotating,
**characterised in that**
- the casing of the assembled turbosupercharger unit is fixedly locked in said unbalance-detecting device, and **in that**
- lubricating oil supplied to the turbosupercharger unit is heated and compressed to substantially the same temperature and pressure as provided under normal operating conditions of the turbosupercharger unit.

2. A balancing process according to claim 1, **characterised in that** the turbosupercharger unit is tested at two different rotation speeds, whereby an unbalance detecting is made at a lower rotation speed and a functionality test is made at a higher rotation speed.

3. A balancing machine for turbosupercharger units of supercharged engines, comprising:
- at least one unbalance-detecting device (2),
- a supporting equipment (9) adapted to associate a substantially complete and assembled turbosupercharger unit (7) with said unbalance-detecting device (2),
- a device (20) for feeding the turbosupercharger unit (7) with lubricating oil, and
- a device (23) for delivering compressed air to the turbosupercharger unit (7) to set the rotor (11) of said unit (7) in rotation,
**characterised in that**
- said supporting equipment (9) comprises means (12-14) for fixedly locking the turbosupercharger unit (7), and **in that**
- said device (20) for feeding lubricating oil comprises heating means (21a) and a pump (22) for keeping the temperature and pressure of the fed lubricating oil at substantially the same temperature and pressure as provided under normal operating conditions.

4. A balancing machine according to claim 3, **characterised in that** said locking means comprise a first and a second locking bracket (12, 14) having respective supply and exhaust holes (14a, 17) for connection with delivery and exhaust pipes (15, 18) of said lubricating oil feeding device (20) and with inlet and outlet ports (16, 19) of the turbosupercharger unit (7).

5. A balancing machine according to claim 3, **characterised in that** said device (23) for delivering compressed air comprises a pressure regulator (25) adapted to vary the rotation speed of the turbosupercharger unit (7) to two different values.

## Patentansprüche

1. Ein Auswuchtverfahren für einen Turbolader von aufgeladenen Motoren, welches über folgende Vorgänge verfügt:
- die Verbindung eines effektiv kompletten und zusammengebauten Turboladers mit einer Unwuchterfassungsvorrichtung,
- die Versorgung des Turboladers während der Verbindung mit besagter Unwuchterfassungsvorrichtung mit Schmieröl,
- das Versetzen des Turboladerrotors durch einen Druckluftstrom in Rotation, während der Turbolader mit Öl versorgt wird, und
- die Unwuchterfassung im Turbolader während dieser sich in Rotation befindet,
**dadurch gekennzeichnet, daß**
- das Gehäuse des zusammengebauten Turboladers fest in die besagte Unwuchterfassungsvorrichtung eingebaut ist, sowie dadurch, **daß**
- Schmieröl, das dem Turbolader zugeführt wird, effektiv auf denselben Temperatur- und Druckwert erhitzt und komprimiert wird, wie dies unter normalen Arbeitsbedingungen des Turboladers der Fall ist.

2. Ein Auswuchtverfahren in Übereinstimmung mit Anspruch 1, **dadurch gekennzeichnet, daß** der Turbolader bei zwei verschiedenen Rotationsgeschwindigkeiten geprüft wird, wobei eine Unwuchterfassung bei einer geringeren Rotationsgeschwindigkeit sowie eine Funktionsfähigkeitskontrolle bei einer höheren Rotationsgeschwindigkeit vorgenommen werden.

3. Eine Auswuchtmaschine für einen Turbolader von aufgeladenen Motoren, welche über folgende Einrichtungen verfügt:
- mindestens eine Unwuchterfassungsvorrichtung (2),
- eine Haltevorrichtung (9), die dazu geeignet ist, einen effektiv kompletten und zusammengebauten Turbolader (7) mit besagter Unwuchterfassungsvorrichtung (2) zu verbinden,
- eine Vorrichtung (20) zur Speisung des Turboladers (7) mit Schmieröl, sowie
- eine Vorrichtung (23) zur Versorgung des Turboladers (7) mit Druckluft, um den Rotor (11) der besagten Einheit (7) in Rotation zu versetzten,
**dadurch gekennzeichnet, daß**
- die besagte Haltevorrichtung (9) über Mittel (12-14) zum festen Einbau des Turboladers (7) verfügt, sowie dadurch, daß
- besagte Vorrichtung (20) zur Schmierölspeisung über Heizmittel (21a) sowie eine Pumpe (22) verfügt, um die Temperatur und den Druck des gespeisten Schmieröls effektiv auf derselben Temperatur- und Druckwerten zu halten, wie dies unter normalen Arbeitsbedingungen der Fall ist.

4. Eine Auswuchtmaschine in Übereinstimmung mit Anspruch 3, **dadurch gekennzeichnet, daß** besagte Befestigungsmittel eine erste sowie eine zweite Abschlußlatte (12, 14) enthalten, die jeweils über Versorgungs- und Abflußöffnungen (14a, 17) zur Verbindung mit Zufuhr- und Abflußleitungen (15,18) der besagten Schmierölspeisungsvorrichtung (20) sowie mit Ein- und Auslaßöffnungen (16, 19) des Turboladers verfügen.

5. Eine Auswuchtmaschine in Übereinstimmung mit Anspruch 3, **dadurch gekennzeichnet, daß** besagte Vorrichtung (23) zur Zufuhr von Druckluft über einen Druckregler (25) verfügt, der dazu dient, um die Rotationsgeschwindigkeit des Turboladers (7) auf zwei verschiedenen Werten zu variieren.

## Revendications

1. Procédé d'équilibrage pour des turbocompresseurs de moteurs suralimentés, comprenant les étapes de:
- associer un turbocompresseur sensiblement complet et assemblé à un dispositif de détection de déséquilibre,
- alimenter en huile lubrifiante le turbocompresseur, pendant qu'il est en engagement avec ledit dispositif de détection de déséquilibre,
- mettre en rotation le rotor du turbocompresseur par un écoulement d'air comprimé, pendant que le turbocompresseur est alimenté en huile lubrifiante, et
- détecter le déséquilibre du turbocompresseur pendant sa rotation,
**caractérisé en ce que**
- l'enveloppe du turbocompresseur assemblé est bloquée de manière fixe dans ledit dispositif de détection de déséquilibre, et **en ce que**
- l'huile lubrifiante alimentée au turbocompresseur est chauffée et comprimée à une température et à une pression essentiellement égales à celles prévues aux conditions de fonctionnement normales du turbocompresseur.

2. Procédé d'équilibrage selon la revendication 1, **caractérisé en ce que** le turbocompresseur est testé à deux vitesses de rotation différentes, de sorte qu'on effectue la détection d'un déséquilibre à une vitesse de rotation plus basse et un test de fonctionnement à une vitesse de rotation plus élevée.

3. Machine d'équilibrage pour des turbocompresseurs de moteurs suralimentés, comprenant:
- au moins un dispositif de détection de déséquilibre (2),
- un équipement de support (9) destiné à associer un turbocompresseur sensiblement complet et assemblé audit dispositif de détection de déséquilibre (2),
- un dispositif (20) destiné à alimenter le turbocompresseur en huile lubrifiante, et
- un dispositif (23) de refoulement d'air comprimé au turbocompresseur (7) pour la mise en rotation du rotor dudit turbocompresseur,
**caractérisée en ce que**
- ledit équipement de support (9) comporte des moyens (12-14) pour bloquer de manière fixe le turbocompresseur, et **en ce que**
- ledit dispositif (20) pour l'alimentation d'huile lubrifiante comporte des moyens de chauffage (21a) et une pompe (22) pour maintenir la température et la pression de l'huile lubrifiante alimentée essentiellement à la même température et pression que celles prévues en conditions de fonctionnement normal.

4. Machine d'équilibrage selon la revendication 3, **caractérisée en ce que** lesdits moyens de blocage comportent un premier et un deuxième étriers de blocage (12, 14) ayant des trous d'alimentation et d'échappement respectifs pour la liaison à des tuyaux de refoulement et d'échappement (15, 18) dudit dispositif d'alimentation en huile lubrifiante (20) et aux orifices d'entrée et de sortie (16, 19) du turbocompresseur (7).

5. Machine d'équilibrage selon la revendication 3, **caractérisée en ce que** ledit dispositif (23) de refoulement d'air comprimé (23) comporte un régulateur de pression (25) destiné à varier la vitesse de rotation du turbocompresseur à deux valeurs différentes.
